(19) Europäisches Patentamt / European Patent Office / Office européen des brevets

(11) **EP 4 519 670 B1**

(12) # EUROPEAN PATENT SPECIFICATION

(45) Date of publication and mention
of the grant of the patent:
**03.06.2026 Bulletin 2026/23**

(21) Application number: **23723464.6**

(22) Date of filing: **27.04.2023**

(51) International Patent Classification (IPC):
**G01N 30/86** (2006.01)

(52) Cooperative Patent Classification (CPC):
**G01N 30/8693**

(86) International application number:
**PCT/EP2023/061076**

(87) International publication number:
**WO 2023/213671 (09.11.2023 Gazette 2023/45)**

(54) **METHOD AND DEVICE FOR CHROMATOGRAPHIC SEPARATION**

VERFAHREN UND VORRICHTUNG ZUR CHROMATOGRAPHISCHEN TRENNUNG

PROCEDE ET DISPOSITIF DE SEPARATION CHROMATOGRAPHIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **05.05.2022 SE 2250547**

(43) Date of publication of application:
**12.03.2025 Bulletin 2025/11**

(73) Proprietor: **GLOBAL LIFE SCIENCES SOLUTIONS GERMANY GMBH**
**37586 Dassel (DE)**

(72) Inventor: **HAHN, Tobias**
**76135 Karlsruhe (DE)**

(74) Representative: **Bedford, Grant Richard**
**Global Life Sciences Solutions Operations UK Ltd**
**Amersham Place**
**Little Chalfont, Buckinghamshire HP7 9NA (GB)**

(56) References cited:
**EP-A1- 0 403 680      CN-A- 113 924 487**
**US-A- 4 579 663**

- **BRISKOT TILL ET AL: "Analysis of complex protein elution behavior in preparative ion exchange processes using a colloidal particle adsorption model", JOURNAL OF CHROMATOGRAPHY A, ELSEVIER, AMSTERDAM, NL, vol. 1654, 24 July 2021 (2021-07-24), XP086763102, ISSN: 0021-9673, [retrieved on 20210724], DOI: 10.1016/ J.CHROMA.2021.462439**

**Description**

TECHNICAL FIELD

The present invention relates to a method for performing chromatography. In particular to chromatographic separation of at least one target molecule using particular chromatography settings.

BACKGROUND

To efficiently perform chromatographic separation, chromatographic process development and/or process characterization and/or process optimization needs to be performed. This involves cumbersome and time-consuming experimental work.

To improve the situation, mechanistic modeling of chromatography is increasingly used to solve the practical challenges of chromatographic process development, process optimization and process characterization through fast and cost-effective computer simulation and optimization.

However, before a mechanistic model can be applied, it first needs to be calibrated for a chromatography process at hand. State of the art models for chromatography include concentration transport equations that describe the movement of solutes through the interstitial volume of the chromatography column. If fluid filled microporous volumes are also involved, e.g., when using a packed bed of porous particles, the transport of solutes into and inside the pores can also be simulated. The adsorption and desorption of solutes is described by so-called isotherm equations, they are needed for all types of chromatography, with the exception of Size-exclusion chromatography (SEC). For example, ion-exchange, hydrophobic interaction, or affinity chromatography.

The biggest challenge in mechanistic modeling is to determine the molecule-specific parameters of the isotherm equation. The isotherm equation describes the equilibrium state of solute concentrations adsorbed and in solution.

The equilibrium state is defined by how much of the solute can be bound onto the adsorber given the solute concentration in the mobile phase and the surrounding conditions (pH, ionic strength/charge, etc.). The equilibrium isotherm typically has a "linear range" at low loading, where the adsorbed molecule concentration is proportional to the molecule concentration in the solute. At higher solute concentration in the mobile phase, the curve flattens out when the adsorber capacity is approached. The isotherm equation describes the solute binding as a function of the mobile phase conditions (ionic strength, pH, etc.) and is molecule specific. Consequently, the isotherm equation includes a number of parameters which values need to be determined through calibration experiments, e.g., performed in the laboratory.

Some conventional methods for model calibration use the so-called Yamamoto method. This method is preferably used for simple ion-exchange chromatography (IEC) models, which decouples the determination of the parameters that affect the linear region of the isotherm equation from the parameters affecting the non-linear region. This reduces the dimensionality of the parameter determination problem, and, as additional advantage, only a small amount of sample is required for experiments in the linear region of the isotherm. Unfortunately, the parameter values identified by the Yamamoto method are only usable if the elution behavior under high-load conditions can indeed be described with simple stoichiometric displacement model (SDM) variants based on the law of mass action (LMA). Should the binding behavior of a molecule not follow the LMA/SDM mechanism, the identified parameters will be misleading and unusable. But even only slightly extended LMA type SDM models, like the IEC model from Mollerup, https://doi.org/10.1016/j.jbiotec.2007.05.036, may no longer produce a closed-form formula when solving the integral in the Yamamoto approach. In addition, novel colloidal models for chromatography are formulated in a too complex way to be easily integrated. The state of the art for non-LMA type models is therefore to use curve fitting, which requires the full solution of all model equations to compute a chromatogram. Not only is this time consuming, but the parameter determination problem can become high-dimensional, resulting in a comparably large expenditure of time.

Thus, there is a need for an improved method for performing chromatographic separation. In particular, for an improved method for performing chromatographic separation supported by mechanistic modelling.

OBJECTS OF THE INVENTION

An objective of embodiments of the present invention is to provide a solution which mitigates or solves the drawbacks and problems described above.

SUMMARY OF THE INVENTION

The above and further objectives are achieved by the subject matter described herein. Further advantageous implementation forms of the invention are further defined herein.

According to a first aspect of the invention, the above mentioned and other objectives are achieved by a method, comprising performing an experiment as a series of chromatography runs, wherein the series of chromatography runs comprises at least two chromatography runs using non-identical operation modes, recording retention behavior data of at least one target molecule for each of the chromatography runs, wherein the retention behavior data indicates at least measured points of elution and properties of the measured points of elution, generating at least one computational grid in at least one dimension, where the extent of the grid is indicative of maximum ranges between a starting point of the experiment and an end point of the experiment, selecting an adsorption model from a set of predetermined adsorption models, the adsorption model having initial candidate values of adsorption model parameters, calculating partitioning coefficient values for all points in the computational grid using the selected adsorption model, calculating integrals of a function of the calculated partitioning coefficient values over at least two paths in the computational grid to obtain properties of calculated points of elution, calculating an aggregated distance measure from the properties of calculated points of elution to respective properties of the measured points of elution, selecting new candidate values of adsorption model parameters, repeating the steps of calculating partitioning coefficient values, calculating integrals, calculating aggregated distance measure, and selecting new candidate values until the aggregated distance measure is minimized, determining parameters of the adsorption model using the selected values of adsorption model parameters that minimizes the aggregated distance measure.

In an embodiment according to the first aspect, the measured points of elution comprise a selection of points in time and/or a selection of volumes and/or a selection of mobile phase modifier concentrations at elution and/or chromatography run characteristics.

In an embodiment according to the first aspect, the extent of the grid is indicative of ranges of mobile phase modifier concentrations, wherein the function of the calculated partitioning coefficient values is an inverse function, wherein calculating the aggregated distance measure comprises calculating properties of the calculated points of elution by calculating integrals over the at least two paths in the computational grid using the inverse function of the calculated partitioning coefficient values to obtain the properties of the calculated points of elution, calculating the aggregated distance measure between the properties of the calculated points of elution and the respective properties of the measured points of elution.

In an embodiment according to the first aspect, the method further comprises selecting a chromatography column model from a set of predetermined chromatography column models, determining candidate values of additional adsorption model parameters by fitting the retention behavior data to a simulated chromatogram.

In an embodiment according to the first aspect, the extent of the computational grid is indicative of a duration in time of the series of chromatography runs and an axial column dimension of the series of chromatography runs, wherein calculating the aggregated distance measure comprises calculating the properties of the calculated points of elution by selecting a chromatography column model from a set of predetermined chromatography column models, calculating propagation speed values of the at least one target molecule from an inlet of the column to an outlet of the column using the selected chromatography column model and partitioning coefficient values calculated on the computational grid, and simulating retention behavior data of the at least one target molecule by calculating the properties of the calculated points of elution by calculating integrals of the propagation speed to obtain at least one trajectory through the computational grid, wherein the aggregated distance measure (D) is calculated between the properties of the calculated points of elution and the respective properties of the measured points of elution.

In an embodiment according to the first aspect, the method further comprises selecting candidate values of additional adsorption model parameters by fitting the retention behavior data to a simulated chromatogram.

In an embodiment according to the first aspect, the method further comprises calibrating a mechanistic model using the determined values of the adsorption model parameters, the selected candidate values of additional adsorption model parameters and the chromatography column model parameters, and simulating a chromatography run using the calibrated mechanistic model to obtain chromatography settings selected from a group of settings comprising loading solution and elution conditions.

In an embodiment according to the first aspect, the method further comprises applying the obtained chromatography settings to chromatographic separation process to separate the at least one target molecule.

In an embodiment according to the first aspect, wherein selecting an adsorption model comprises selecting a plurality of adsorption models from the set of predetermined adsorption models, wherein calculating partitioning coefficient values comprises calculating partitioning coefficient values for each of the plurality of adsorption models, wherein calculating integrals comprises calculating integrals for each of the plurality of adsorption models, calculating an aggregated distance measure for each of the plurality of adsorption models, selecting new candidate values of adsorption model parameters, for each of the plurality of adsorption models, repeating the steps of calculating partitioning coefficient values, calculating integrals, calculating aggregated distance measure, and selecting until the aggregated distance measure is minimized for each of the plurality of adsorption models, and determining parameters (595) of the adsorption model using the selected values of adsorption model parameters related to the adsorption model of the plurality of adsorption models that minimizes the aggregated distance measure.

At least one advantage of the disclosure according to the first aspect is that model parameters can quickly be derived from relatively few experiments conducted at low load density.

According to a second aspect of the invention, the above mentioned and other objectives are achieved by a device, the device comprising and a control unit comprising circuitry, the circuitry comprising a processing circuitry, and a memory, said memory comprising instructions executable by said processing circuitry, wherein the control unit is communicatively coupled to controllable units of the fluid network, whereby said device is configured to perform the method according to the first aspect when the instructions are executed by said processing circuitry.

According to a third aspect of the invention, the above mentioned and other objectives are achieved by a computer program comprising computer-executable instructions for causing a control unit, when the computer-executable instructions are executed on processing circuitry comprised in the control unit, to perform any of the method steps according to the first aspect.

According to a fourth aspect of the invention, the above mentioned and other objectives are achieved by a computer program product comprising a computer-readable storage medium, the computer-readable storage medium having the computer program according to the third aspect embodied therein.

Advantages of the disclosure according to the second to fourth aspect is that model parameters can quickly be derived from relatively few experiments conducted at low load density. A more complete understanding of embodiments of the invention will be afforded to those skilled in the art, as well as a realization of additional advantages thereof, by a consideration of the following detailed description of one or more embodiments. It should be appreciated that like reference numerals are used to identify like elements illustrated in one or more of the figures.

BRIEF DESCRIPTION OF THE DRAWINGS

Fig. 1 illustrates a diagram showing properties of measured points of elution for different operation modes in two or more chromatographic runs.

Fig. 2 illustrates a computational grid, a surface and measured points of elution according to one or more embodiments of the present disclosure.

Fig. 3 illustrates an aggregated distance measure according to one or more embodiments of the present disclosure.

Fig. 4 illustrates paths in a computational grid according to one or more embodiments of the present disclosure.

Fig. 5 shows a flowchart of a method according to one or more embodiments of the present disclosure.

Fig. 6 shows a first embodiment of the method described in relation to Fig. 5.

Fig. 7 shows a second embodiment of the method described in relation to Fig. 5.

Fig. 8 shows embodiments of the method described in relation to Fig. 6 and/or Fig. 7.

Fig. 9 illustrates a device according to one or more embodiments of the present disclosure.

A more complete understanding of embodiments of the invention will be afforded to those skilled in the art, as well as a realization of additional advantages thereof, by a consideration of the following detailed description of one or more embodiments. It should be appreciated that like reference numerals are used to identify like elements illustrated in one or more of the figures.

DETAILED DESCRIPTION

In order to predict or simulate any kind of chromatographic process, the governing natural principles must be described in mathematical model equations. In fact, column chromatography models typically comprise three individual but coupled models: a fluid dynamics model, describing general flow and transport patterns in the column, a model to describe the concentration transport within beads' pores, if applicable, and an adsorption isotherm that models the adsorption process via thermodynamics. A large variety of such models are known in literature, describing different chromatography and interaction modes. Given the model and corresponding model parameters, the resulting chromatogram can be predicted by means of computer simulation.

Mechanistic models consider physical and biochemical effects by means of natural laws. Outside the adsorber beads within a chromatography system for example, the injected components are transported by a convection effect, which is typically induced by a connected pump. A dispersion effect comprises, among other effects, molecular diffusion, and non-ideal flow. Inside the pores of the adsorbing particle/bead, diffusion dominates movement of fluid. Finally, the component is adsorbed onto the inner surface of the particle/bead.

Examples of mechanistic models can be found under:
https://www.cytivalifesciences.com/en/us/solutions/bioprocessing/knowledge-center/what-are-mechanistic-chromato graphy-models.

Examples of isothermal models can be found under:
https://www.cytivalifesciences.com/en/us/solutions/bioprocessing/knowledge-center/adsorption-isotherm-models.

Examples of other models can be found under https://doi.org/10.1016/j.jbiotec.2007.05.036, and https://doi.org/ 10.1016/i.chroma.2021.462397

An "or" in this description and the corresponding claims is to be understood as a mathematical OR which covers "and" and "or", and is not to be understand as an XOR (exclusive OR). The indefinite article "a" in this disclosure and claims is not limited to "one" and can also be understood as "one or more", i.e., plural.

In the present disclosure reference will be made interchangeably to processing circuitry and processing means.

In the present disclosure the term "target molecule" denotes a desired molecule, typically a molecule separated in a liquid chromatographic process.

In the present disclosure the term "chromatography" or "liquid chromatography" denotes a process for separating components of a mixture. The mixture is dissolved in a first substance called the mobile phase. The mixture and first substance are fed to an inlet of a chromatography column filled with a second substance called the stationary phase. The different components of the mixture travel through the stationary phase at different speeds, thereby causing them to separate from one another at the outlet of the chromatography column. The characteristics of the specific mobile and stationary phases determines which substances travel more quickly or slowly, and how well they are separated. These different travel times are termed retention time and is recorded as retention data.

In the present disclosure the term "chromatography run" denotes a cycle where the mixture and first substance travel from the inlet to the outlet of the chromatography column.

In the present disclosure the term "operation mode" defines the chromatography run characteristics. E.g., characteristics of the chromatography column, characteristics of beads/microporous volumes, characteristics of the mobile phase, characteristics of the stationary phase and characteristics of the mixture. This may include mobile phase modifiers such as pH, salt concentration and ionic strength, which may vary during the chromatography run.

In the present disclosure the term "retention behavior" and "retention behavior data" denotes the behavior of the mixture and first substance travelling through the chromatography column and the data recorded of that behavior. The retention behavior data may further comprise the chromatography run characteristics defined above. The retention behavior data may further comprise processed or aggregated data based on the above-mentioned categories of data. In one example, retention behavior data comprises travel time of components of the mixture from the inlet of the chromatography column to the outlet of the chromatography column. In one further example, retention behavior data comprises run volume or the total volume of the mixture and the mobile phase.

In the present disclosure the term "point of elution" denotes a peak of a component of the mixture arriving and being detected at the outlet of the chromatography column. In one example, the "point of elution" represents a peak in a chromatogram from a chromatography run. Detection of arriving components may be performed using a spectrophotometer, mass spectrometer, an Ultraviolet (UV) detector or fraction analysis. In relation to the recorded signal, the "point of elution" can for example be defined as the point of highest signal value, as last maximum of the signal or as a center of mass.

In the present disclosure the term "properties of measured point of elution" or "properties of calculated points of elution" denotes retention behavior data that defines a measured point of elution, e.g., travel time from injection at the inlet to detection at the outlet of the column, the total volume of the mixture, and mobile phase composition at elution, including current ionic strength, salt concentrations, current pH, current elution gradient slope etc.

A point of injection or starting point denotes chromatography characteristics when a component of the mixture arrives at the inlet of chromatography column, e.g., a point in time. In one example, the "point of injection" or POI represents a first point in a chromatogram from a chromatography run. In another example, the POI is defined as the point in time when half of the sample volume was injected.

In the present disclosure the term "adsorption model" denotes a model that models at least the adsorption equilibrium. Typically, an adsorption model describes the concentration change of adsorbed mixture as a function of the mixture's concentrations in the mobile phase and the concentration bound to the adsorber/bead, under consideration of material and mobile phase properties. Examples of adsorption models are the Langmuir Model or the Colloidal particle adsorption (CPA) model. See also https://www.cytivalifesciences.com/en/us/solutions/bioprocessing/knowledge-center/ adsorption-isotherm-models

In the present disclosure the term "partitioning coefficient value" denotes the ratio of the concentration of a substance in one phase to a concentration in a second phase when the two concentrations are at equilibrium.

In the present disclosure the term "computational grid" denotes a discretization of the computational domain, made of elements, faces and nodes. One example of a computational grid is a Cartesian grid. In Cartesian grids, the faces of the elements are aligned with the axes of a Cartesian frame or reference coordinate system. The nodes, defined as the intersection of the faces, can be placed either uniformly (equidistant) or non-uniformly. Accordingly, the elements (or cells) can e.g., be line segments (1D), rectangles (2D) or cuboids (3D). An example of a computational grid can be found in "Notes on computational Thermo-Fluid Dynamics" DOI:10.13140/RG.2.1.5174.3124. The computational grid has an extent that effectively defines maximum/minimum starting points and end points of experiments or chromatography runs used in the present disclosure.

In the present disclosure the term "points in the computational grid" denotes discrete points of the computational grid. Typically, each point in the computational grid comprises as many (coordinate) values as the dimension of the computational grid. I.e., in a one-dimensional computational grid each point comprises a single value, in a two-dimensional computational grid each point comprises two values and, in a N, dimensional computational grid each point comprises N values.

In the present disclosure the term "path" or "path in the computational grid" denotes sets of values from the computational grid from a starting point (SP) to an end point (EP), e.g., points indicating variation of pH and salt concentration.

In the present disclosure the term "integrating" or "calculating integrals" denotes calculating the definite integral on an interval. An example of a method to calculate the definite integral of a function defined on a computational grid on a given interval is the composite trapezoidal rule.

In the present disclosure the term "aggregated distance measure" denotes a distance measure calculated using at least two partial distance measures, e.g., partial distances between properties of measured and calculated points of elution. An example of an aggregated distance measure is the measure used in the least-squares method, where the distance measure is a sum of squared residuals that is minimized by varying parameter candidate values. The residuals are typically calculated between one or more properties of measured and calculated points of elution.

In the present disclosure the term "a fluid network" denotes fluidly coupled device components configured to hold fluids, direct fluids, and control flow of fluids. Examples of device components comprise in a fluid network are conduits/pipes, fluid containers/receptacles, sensors, valves, fluid columns etc. Some device components may be controllable and are communicatively coupled to a control unit and reacts to control signals received from the control unit and/or send data, e.g., device component characteristics and/or measurement data, as control signals to the control unit. Examples of such controllable device components are sensors and controllable valves. In brief, the present disclosure removes the need for slow, high-dimensional curve fitting for model calibration, in particular to calibrate an isotherm adsorption model. The present disclosure further determines isotherm adsorption parameters in the linear range using observed points of elution only and does not require knowledge of a full chromatogram. The advantage of this disclosure is to quickly derive model parameters from relatively few experiments conducted at low load density.

The disclosure is identifying isotherm equation parameters active in the linear range by applying a generalized method inspired by the Yamamoto method, but can be used for any given model equation, thereby enabling fast identification of model parameters beyond LMA type models. Further an approximate calculation of the point of elution is made for any given model equation, also supporting the use of more than one mobile phase modifier and non-linear gradient elution experiments, which is a known drawback of the traditional Yamamoto method.

At least one advantage of the present disclosure is that complexity of calculations and time required to arrive at a calibrated chromatography model and thereby settings for liquid chromatography, can be significantly reduced.

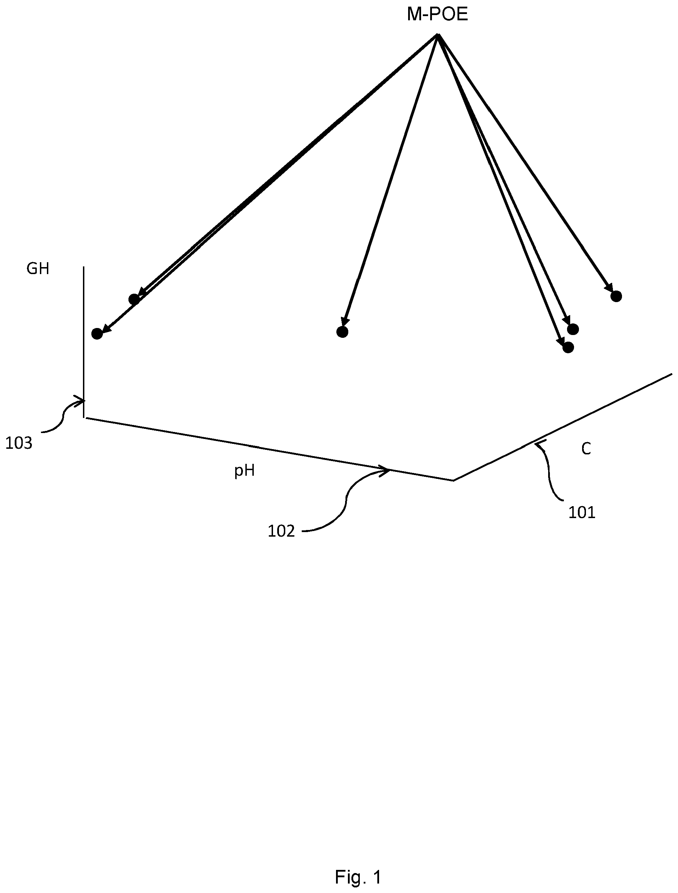

Fig. 1 illustrates a diagram showing properties of measured points of elution M-POE for different operation modes in two or more chromatographic runs. As can be seen in Fig. 1, different combinations of chromatography run characteristics/operation mode result in different points of elution. E.g., characteristics of the chromatography column, characteristics of beads/microporous volumes, characteristics of the mobile phase, characteristics of the stationary phase and characteristics of the mixture. The properties of the M-POE may be expressed in terms of mobile phase modifiers 101, 102 such as pH, salt concentration and ionic strength at the time the peak was detected.

In the example, a diagram in three dimensions is shown. It is understood that any number of dimensions could be applied without departing from the present disclosure. On the Y axis pH is shown, on the X axis salt concentration is shown and on the Z axis a parameter GH is shown. The parameter GH 103 may indicate the normalized gradient slope, a run characteristic used in the traditional Yamamoto method.

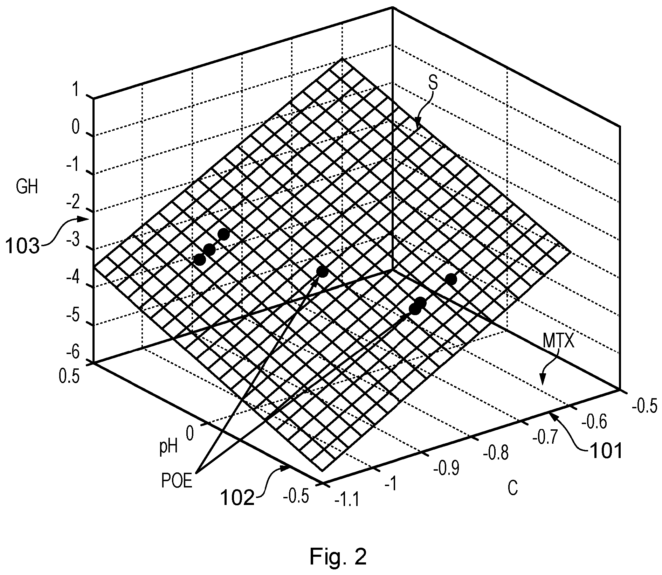

Fig. 2 illustrates a computational grid MTX, a surface S and measured points of elution (M-POE) according to one or more embodiments of the present disclosure. The computational grid is in Fig. 2 shown as a two-dimensional computational grid 101, 102. However, it is understood that a computational grid of any dimension may be selected depending on application without departing from the present disclosure.

In one example, the computational grid MTX is arranged in one dimension where the pH is varied during a chromatography run according to a particular gradient, and the point of elution is characterized by a "normalized gradient slope" GH 103 and 102 pH at the time of peak detection.

In one further example, the computational grid is arranged in one dimension where the salt concentration C is varied during a chromatography run according to a particular gradient, and the point of elution is characterized by a "normalized gradient slope" GH and salt concentration at the time of peak detection.

In one further example, the computational grid is arranged in two dimensions where the pH together with salt concentration C are varied during chromatography runs. This is the case in the example shown in Fig. 2. The points of elution of a target molecule are shown with three characteristic properties.

As an adsorption model predicts the outcome of a chromatographic experiment, it can be used to generate predicted points of elution that naturally must lie on a hypersurface in the grid.

A surface S is generated by applying candidate values of parameters to an adsorption model, and then simulating/calculating properties of the points of elution for the extent of the computational grid. In other words, when pH and salt concentration C at elution are used as input to the model, the model can be used to calculate normalized gradient slopes leading to the given points of elution properties forming the surface. Different candidate values are used to minimize the distance between the measured properties of the points of elution M-POE and the surface S/calculated with the model /partitioning coefficient values. As multiple distances between the measured properties of the points of elution M-POE and the surface/ are considered, this effectively results in minimizing an aggregated distance D.

In one example, the computational grid is arranged in three dimensions where the pH together with a first salt concentration C1 and together with a second salt concentration C2 are varied according to particular gradients.

This solution has the advantage that also non-linear surfaces may be considered.

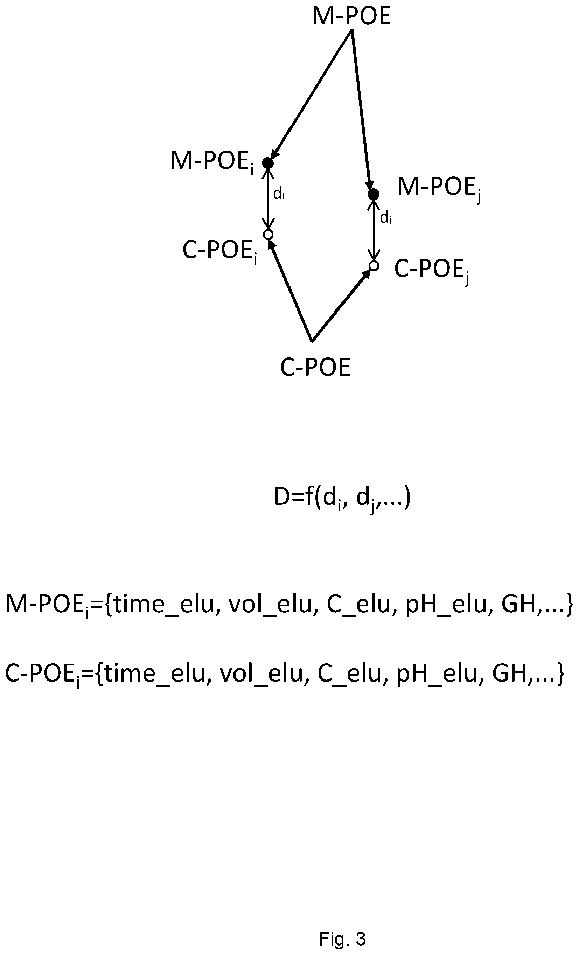

Fig. 3 illustrates an aggregated distance measure D according to one or more embodiments of the present disclosure. Distances are calculated between the surface S and the respective measured properties of the points of elution M-POE_i.

In one embodiment, the aggregated distance measure D is the measure used in the least-squares method, where the distance measure is a sum of squared residuals that is minimized by varying parameter candidate values. A residual is then formed by a distance from the surface S to the respective property of the measured points of elution M-POE.

Examples properties of the measured points of elution M-POE are travel time from inlet to outlet of the column, the total volume of the mixture and the mobile phase, current salt concentration, current pH, current gradient slope etc.

Other curve fitting methods known in the art may be used depending on the application. Examples of other curve fitting methods are Bayesian linear curve fitting or Ridge regression.

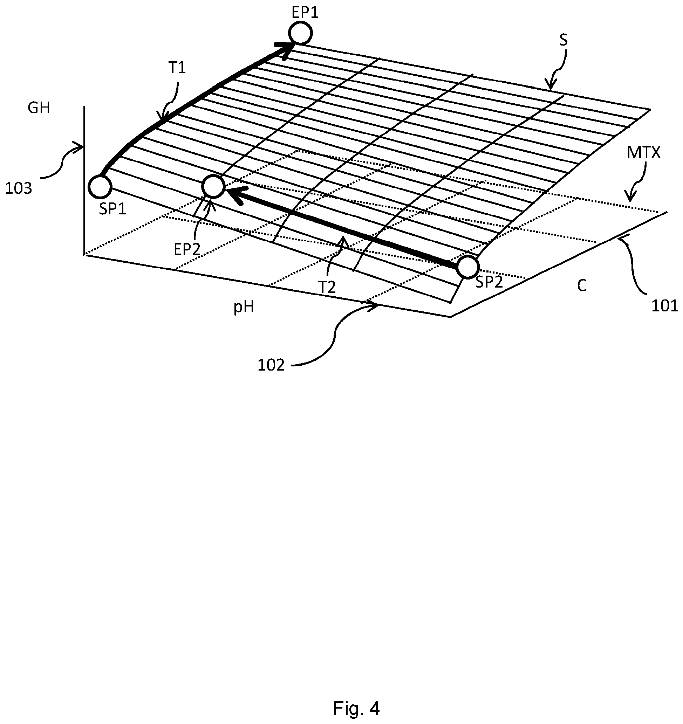

Fig. 4 illustrates paths T1, T2 in a computational grid MTX according to one or more embodiments of the present disclosure. The paths are indicative of how operation modes are varied in a series of chromatography runs.

In one example, a molecule's retention behavior in a first chromatography run is described using a first path T1, where the pH 102 is constant, and the salt concentration C 103 is varied according to a first gradient defined by the extent of the computational grid MTX. In other words, the salt concentration increases continuously from the starting point SP1 until elution at the end point EP1,

In one further example, a molecule's retention behavior in a second chromatography run is described using a second path T2, the salt concentration C is constant, and the pH is varied according to a second gradient defined by the extent of the computational grid MTX. In other words, the pH is increased continuously from the starting point SP2 to the until elution at the end point EP2.

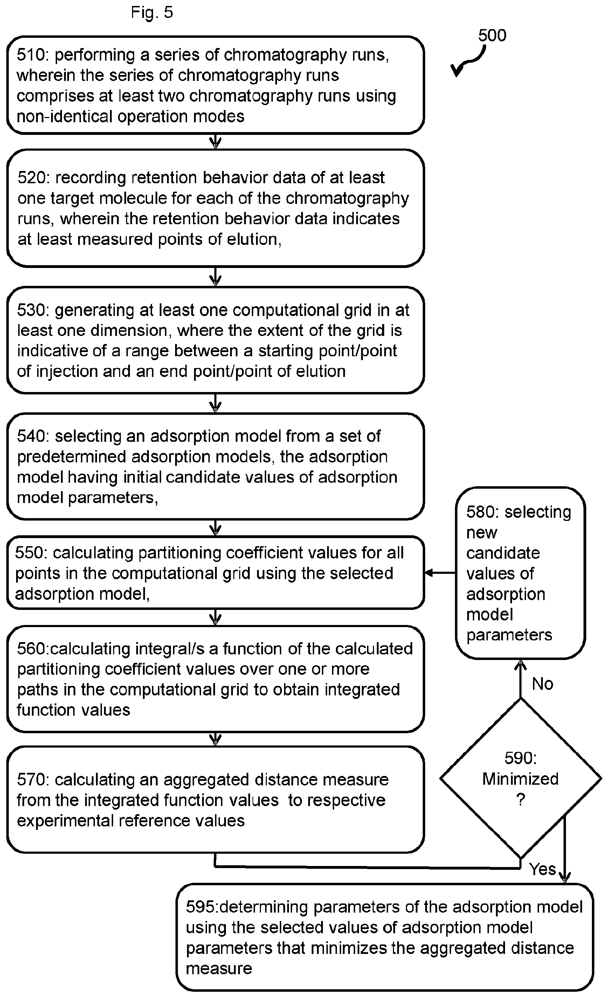

Fig. 5 shows a flowchart of a method 500 according to one or more embodiments of the present disclosure. In one or more embodiments, the method 500 is performed by a computer. The method comprises:

Step 510: performing an experiment as a series of chromatography runs. The series of chromatography runs comprises at least two chromatography runs using non-identical operation modes.

Operation modes are further described in the initial part of the description.

In one example, pH is varied in each chromatography run of the series of chromatography runs according to particular gradients. In one further example, pH is as well as salt concentration C are varied in each chromatography run of the series of chromatography runs according to particular gradients.

Step 520: recording retention behavior data of at least one target molecule for each of the chromatography runs, wherein the retention behavior data indicates at least measured points of elution M-POE. The measured points of elution M-POE have properties M-POE_i as defined previously.

The retention behavior data may comprise any property or characteristics of a chromatography run. Examples of recorded retention behavior data is retention time or time for the target molecule to travel from an inlet of a column to an outlet of a column, run volume or volume of the mixture used in a chromatography run.

Step 530: generating at least one computational grid MTX in at least one dimension, where the extent of the grid is indicative of maximum ranges between a starting point/point of injection SP and an end point/point of elution EP.

The computational grid is further described in the initial part of the description. In one example, the computational grid has two dimensions, where pH is indicated in one dimension and salt concentration C is indicated by a second dimension. The grid can in this example be seen as a mesh where each intersection point of the mesh is represented by a pair of pH and C values.

In other words, a two-dimensional computational grid MTX is generated for an extent of a first range of pH and a second range of salt concentration C. A grid can then be formed using suitable step sizes along the first and second range.

Step 540: selecting an adsorption model from a set of predetermined adsorption models. The adsorption model having initial candidate values of adsorption model parameters.

Adsorption models are further described in the initial part of the description and in: https://www.cytivalifesciences.com/en/us/solutions/bioprocessing/knowledge-center/adsorption-isotherm-models.

Step 550: calculating partitioning coefficient values for all points in the computational grid using the selected adsorption model.

In one example, partitioning coefficient values K are calculated according to the relation

$$K(pH, C) = k_{eq} \cdot exp\left(k_{eq,1} \cdot pH\right)\left(\frac{\Lambda}{C}\right)^{v + v_1 \cdot pH}$$ where $k_{eq,\ keq,1},\ v,\ v_1,$ are molecule specific parameters of the

model and $\Lambda$ is a constant.

Step 560: calculating integrals of a function of the calculated partitioning coefficient values over at least two paths in the computational grid MTX to obtain properties C-POE_i of calculated points of elution.

Paths and computational grids are further described in the initial part of the description.

Step 570: calculating an aggregated distance measure D from the properties of calculated points of elution C-POE_i to respective experimental reference property values M-POE_i of the measured points of elution.

The aggregated distance measure is further described in relation to Fig. 3.

Step 580: selecting new candidate values of adsorption model parameters.

In one example, the new candidate values of adsorption model parameters are selected from a predetermined set of candidate values. Examples of parameters of the adsorption model are $k_{eq,\ keq,1},\ v,\ v_1$ as in the above example.

Step 590: repeating the steps of calculating partitioning coefficient values 550, calculating integrals 560, calculating aggregated distance measure 570 and selecting 580 new candidate values until the aggregated distance measure D is minimized.

Step 595: determining parameters of the adsorption model using the selected values of adsorption model parameters that minimizes the aggregated distance measure.

In one example, the parameters of the adsorption model are determined by using the latest parameters of the adsorption model selected in step 580.

In one embodiment, the measured points of elution M-POE comprise a selection of points in time and/or a selection of volumes and/or a selection of mobile phase modifier concentrations at elution.

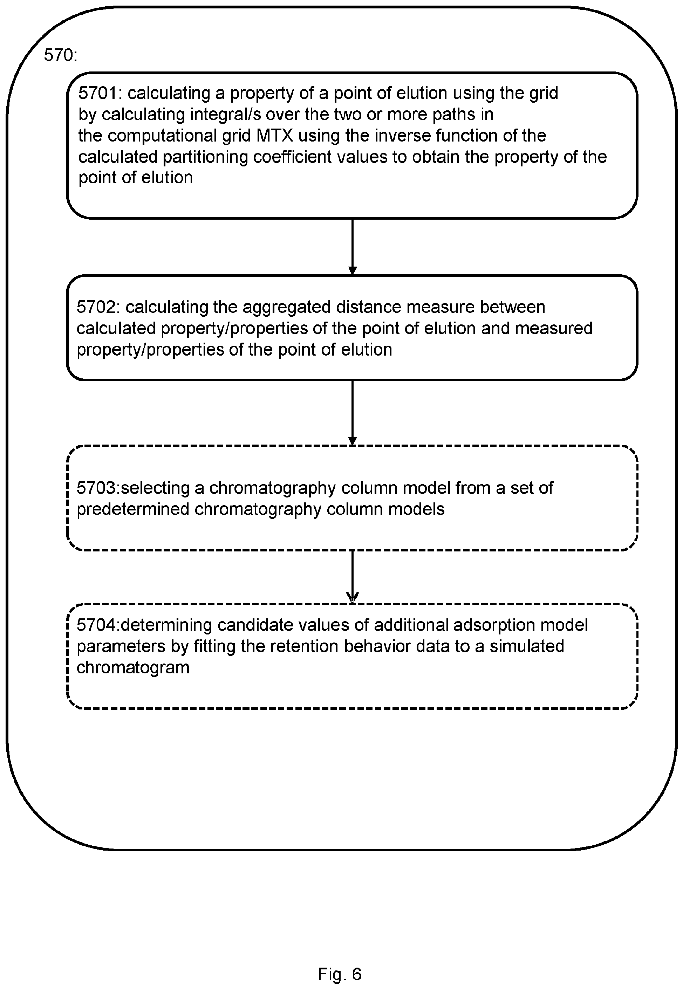

Fig. 6 shows a first embodiment of the method described in relation to Fig. 5. In this embodiment, the extent of the grid is indicative of ranges of mobile phase modifier concentrations 101, 102 attained during the chromatography runs. The paths may be defined by any subset within the extent of the computational grid MTX, i.e., from a starting point/point of injection SP to an end point/point of elution EP in one or more dimensions. The function comprises an inverse function. Calculating the aggregated distance measure (D) comprise:

Step 5701: calculating properties C-POE_i of a point of elution using the grid MTX by calculating integrals over the two or more paths in the computational grid MTX using the inverse function of the calculated partitioning coefficient values to obtain the property of the point of elution C-POE_i.

Step 5702: calculating the aggregated distance measure D between calculated property/properties C-POE_i of the point of elution and measured property/properties M-POE_i of the point of elution.

Alternatively, or additionally, the method further comprises:

Step 5703: selecting a chromatography column model from a set of predetermined chromatography column models.

Step 5704: determining candidate values of additional adsorption model parameters by fitting the retention behavior data to a simulated chromatogram. Examples of additional adsorption model parameters are parameters describing binding kinetics, or parameters only identifiable in the non-linear isotherm range, describing e.g. steric effects or molecule-molecule interactions.

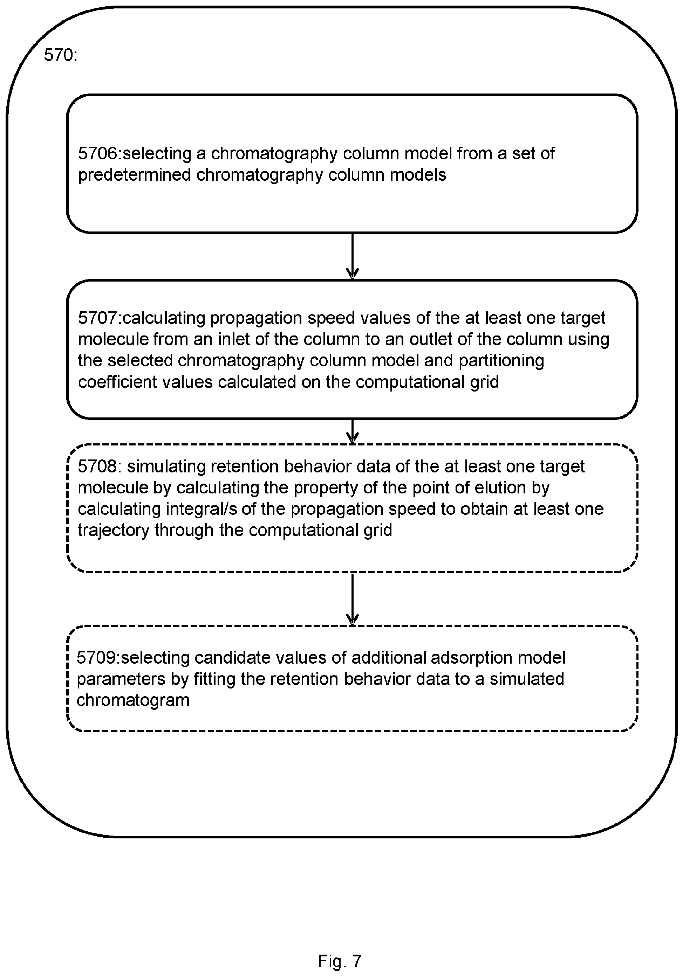

Fig. 7 shows a second embodiment of the method described in relation to Fig. 5. In this embodiment, the extent of the computational grid MTX is indicative of a duration in time of the series of chromatography runs and an axial column dimension of the series of chromatography runs. Calculating the aggregated distance measure D comprises:

Step 5706: selecting a chromatography column model from a set of predetermined chromatography column models.

Alternatively, or additionally, the method further comprises:

Step 5707: calculating propagation speed values of the at least one target molecule from an inlet of the column to an outlet of the column using the selected chromatography column model and partitioning coefficient values calculated using the computational grid.

Alternatively, or additionally, the method further comprises:

Step 5708: simulating retention behavior data of the at least one target molecule by calculating the properties C-POE_i of the point of elution by calculating integral/s of the propagation speed to obtain at least one trajectory through the computational grid MTX.

Alternatively, or additionally, the method further comprises:

Step 5709: selecting candidate values of additional adsorption model parameters by fitting the retention behavior data to a simulated chromatogram.

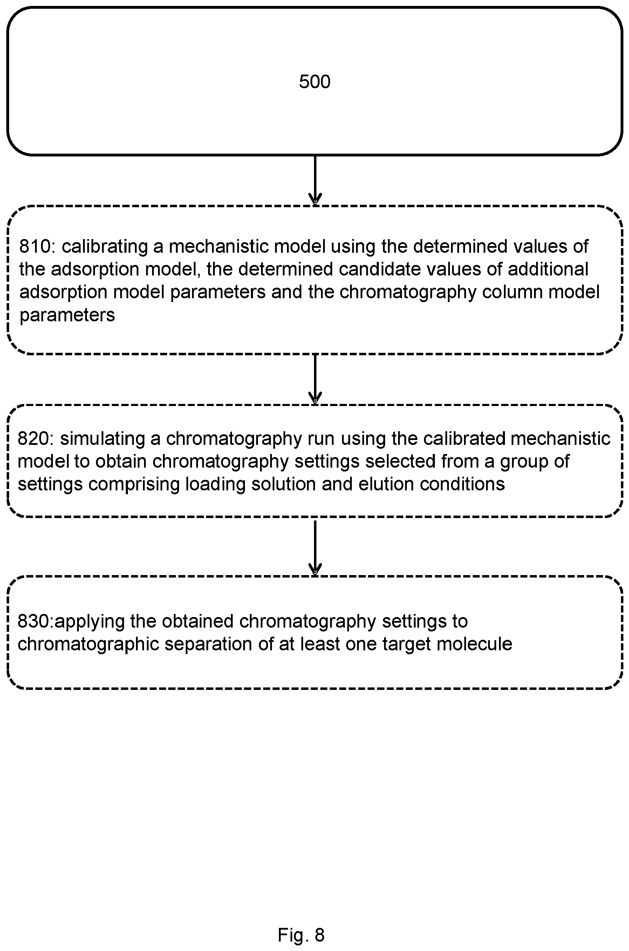

Fig. 8 shows embodiments of the method described in relation to Fig. 6 and/or Fig. 7. The method further comprises:

Step 810: calibrating a mechanistic model using the determined values of the adsorption model, the selected candidate values of additional adsorption model parameters and the chromatography column model parameters.

Alternatively, or additionally, the method further comprises:

Step 820: simulating a chromatography run using the calibrated mechanistic model to obtain chromatography settings selected from a group of settings comprising loading solution and elution conditions.

Alternatively, or additionally, the method further comprises:

Step 830: applying the obtained chromatography settings to chromatographic separation process to separate the at least one target molecule.

Additionally, or alternatively, the method further comprises performing model discrimination:

Where selecting 540 an adsorption model comprises selecting a plurality of adsorption models from the set of predetermined adsorption models.

Where calculating 550 partitioning coefficient values comprises calculating partitioning coefficient values for each of the plurality of adsorption models.

Where calculating integrals 560 comprises calculating integrals for each of the plurality of adsorption models.

Where calculating (570) an aggregated distance measure D is performed for each of the plurality of adsorption models.

Where selecting 580 new candidate values of adsorption model parameters is performed for each of the plurality of adsorption models.

Where, determining parameters 595 of the adsorption model using the selected values of adsorption model parameters related to the adsorption model of the plurality of adsorption models that minimizes the aggregated distance measure.

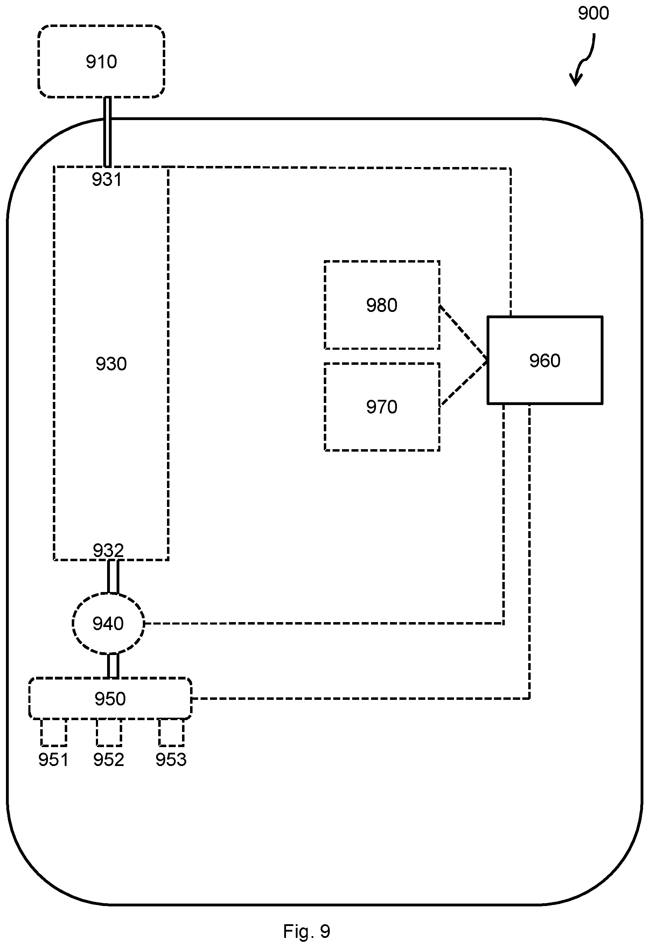

Fig. 9 illustrates a device 900 according to one or more embodiments of the present disclosure.

The device 900 comprise a control unit 960 which comprises circuitry, e.g., a processor and a memory. The memory may contain instructions executable by the processor, whereby said device is operative to perform any of the steps or methods described herein.

Additionally, or alternatively, the device 900 may further comprise a controllable fluid network, e.g., comprising fluidly coupled pipes, fluidly coupled and controllable valves, and fluidly coupled and controllable pumps.

Additionally, or alternatively, the device may further comprise a chromatography column 930 further comprising at least one fluid inlet 931 and one fluid outlet 932. The fluid inlet 931 and one fluid outlet 932 are typically fluidly coupled to the controllable fluid network The device 900 may further optionally comprise the fraction collection unit 950. The fraction collection unit 950 is typically fluidly coupled to the controllable fluid network.

Additionally, or alternatively, the device further comprises a display 980.

Additionally, or alternatively, the device further comprises an input device 970.

In one embodiment, the device further comprises one or more sensors configured to measure characteristics of the fluid in the device and/or the fluid network. The control unit 960 is further communicatively coupled to each of the sensors. The sensors may be configured to pressure and/or measure pH and/or conductivity of fluids in the device. Any suitable sensor for performing measurements on fluids may be used.

The device 900 may be in the form of e.g., a chromatography apparatus, an Electronic Control Unit, a server, an on-board computer, a stationary computing device, a laptop computer, a tablet computer, a handheld computer, a wrist-worn computer, a smart watch, a smartphone, or a smart TV. The device 900 may comprise processing circuitry communicatively coupled to a transceiver configured for wired or wireless communication. The device 900 may further comprise at least one optional antenna (not shown in figure). The antenna may be coupled to the transceiver and is configured to transmit and/or emit and/or receive wired or wireless signals in a communication network, such as Wi-Fi, Bluetooth, 3G, 4G, 5G etc. In one example, the processing circuitry may be any of a selection of processing circuitry and/or a central processing unit and/or processor modules and/or multiple processors configured to cooperate with each-other. Further, the device 900 may further comprise a memory. The memory may e.g., comprise a selection of a hard RAM, disk drive, a floppy disk drive, a flash drive or other removable or fixed media drive or any other suitable memory known in the art. The memory may contain instructions executable by the processing circuitry to perform any of the steps or methods described herein. The processing circuitry may optionally be communicatively coupled to a selection of any of the transceiver the memory, one or more sensors, such as pH sensors, conductivity sensors and pressure sensors or any suitable type of sensor capable of measuring characteristics of the device and/or fluids processed by the device. The device 900 may be configured to send/receive control signals directly to any of the above-mentioned units or to external nodes or to send/receive control signals via the wired and/or wireless communications network.

The wired/wireless transceiver and/or a wired/wireless communications network adapter may be configured to send and/or receive data values or parameters as a signal to or from the processing circuitry to or from other external nodes. E.g., measured pH or conductivity or generated volume of the buffer solution.

In an embodiment, the transceiver communicates directly to external nodes or via the wireless communications network.

In one or more embodiments, the input device 970 is configured to receive input or indications from a user and send a user input signal indicative of the user input or indications to the processing circuitry.

In one or more embodiments, the display 980 is configured to receive a display signal indicative of rendered objects, such as text or graphical user input objects, from the processing circuitry and to display the received signal as objects, such as text or graphical user input objects.

In one embodiment the display 980 is integrated with the user input device 970 and is configured to receive a display signal indicative of rendered objects, such as text or graphical user input objects, from the processing circuitry and to display the received signal as objects, such as text or graphical user input objects, and/or configured to receive input or indications from a user and send a user-input signal indicative of the user input or indications to the processing circuitry.

In a further embodiment, the device 900 may further comprise and/or be coupled to one or more additional sensors (not shown in the figure) configured to receive and/or obtain and/or measure physical properties pertaining to the device and/or or an atmosphere surrounding the device and send one or more sensor signals indicative of the physical properties of the device to the processing circuitry. E.g., a temperature sensor measuring ambient air temperature.

In embodiments, the communications network communicate using wired or wireless communication techniques that may include at least one of a Local Area Network (LAN), Metropolitan Area Network (MAN), Global System for Mobile Network (GSM), Enhanced Data GSM Environment (EDGE), Universal Mobile Telecommunications System, Long term evolution, High Speed Downlink Packet Access (HSDPA), Wideband Code Division Multiple Access (W-CDMA), Code Division Multiple Access (CDMA), Time Division Multiple Access (TDMA), Bluetooth®, Zigbee®, Wi-Fi, Voice over Internet Protocol (VoIP), LTE Advanced, IEEE802.16m, Wireless MAN-Advanced, Evolved High-Speed Packet Access (HSPA+), 3GPP Long Term Evolution (LTE), Mobile WiMAX (IEEE 802.16e), Ultra Mobile Broadband (UMB) (formerly Evolution-Data Optimized (EV-DO) Rev. C), Fast Low-latency Access with Seamless Handoff Orthogonal Frequency Division Multiplexing (Flash-OFDM), High Capacity Spatial Division Multiple Access (iBurst®) and Mobile Broadband Wireless Access (MBWA) (IEEE 802.20) systems, High Performance Radio Metropolitan Area Network (HIPERMAN), Beam-Division Multiple Access (BDMA), World Interoperability for Microwave Access (Wi-MAX) and ultrasonic communication, etc., but is not limited thereto.

Moreover, it is realized by the skilled person that the device 900 may comprise the necessary communication capabilities in the form of e.g., functions, means, units, elements, etc., for performing the present solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, MSDs, TCM encoder, TCM decoder, power supply units, power feeders, communication interfaces, communication protocols, etc. which are suitably arranged together for performing the present solution.

Especially, the processing circuitry and/or processing means of the present disclosure may comprise one or more instances of processing circuitry, processor modules and multiple processors configured to cooperate with each-other, Central Processing Unit (CPU), a processing unit, a processing circuit, a processor, an Application Specific Integrated Circuit (ASIC), a microprocessor, a Field-Programmable Gate Array (FPGA) or other processing logic that may interpret and execute instructions. The expression "processing circuitry" and/or "processing means" may thus represent a processing circuitry comprising a plurality of processing circuits, such as, e.g., any, some, or all of the ones mentioned above. The processing means may further perform data processing functions for inputting, outputting, and processing of data comprising data buffering and device control functions, such as user interface control, or the like.

Exemplary embodiments

In an exemplary embodiment, it is assumed that there exists a unique mapping of elution time to the elution volume/retention volume of the target molecule. Using the mapping, the elution volume can be determined from the elution time, or vice versa; the case of elution volume will not be considered further. Only in the case of pauses in the flow would a unique mapping not be possible, but in this case, elution would not have to be expected either.

Calculation of properties of the point of elution in case of linear gradient elution.

In the case of a linear gradient, there is also a unique mapping of the retention time to the mobile phase modifier's concentration that changes over a predetermined gradient. If the modifier concentration at elution is known, the retention time can be deduced from that modifier concentration.

The remaining question to be answered is then how a modifier concentration at the time of elution can be determined for a given operation mode, characterized here by the specific gradient slope.

The mathematical derivation of Yamamoto's method bases on the following equation $\int_{CB}^{CR} \frac{1}{Kp(C)} dC = GH$, stating that the integral of the partitioning coefficient of a target molecule and partitioning coefficient Kp(C) from the concentration CB at the beginning of the gradient to the concentration CR at elution is equal to the normalized gradient slope GH. It is to be noted, that some textbooks explicitly include the partitioning coefficient of a modifier species K', writing the denominator as (Kp(C)-K') while other books assume it to be included in Kp(C). The latter notation is used here.

Assuming the general case that the above integral cannot be easily solved, it is evaluated e.g. numerically along a discretized path of points {C0, C1 ,... ,Cn}. Here C0=CB, and Cn corresponds at least to the modifier concentration at the end of the gradient.

$$\sum_{i=1,2,\ldots} \int_{C(i-1)}^{Ci} \frac{1}{Kp(C)} dC = GH$$

If the modifier concentration at the time of elution is to be determined for a given GH, piecewise integration and summation are continued until the subtotal is equal to or greater than GH. In the first case, the path point Ci provides the sought value; in the latter case, a more precise value between C(i-1) and Ci can be determined by interpolation.

If the normalized gradient slope GH relating to a given modifier concentration at the time of elution is to be determined, piecewise integration and summation are continued until the subtotal Ci is equal to or greater than CR. In the first case, the current sum provides the sought value; in the latter case, a more precise value between the last subtotal and the sum can be determined by interpolation.

Calculation of properties of the point of elution in the general case

In the case of isocratic elutions, step elutions or more complex operation modes, the existence of a bijective mapping of the retention time to the mobile phase modifier concentration(s) can not be assumed. Because the modifier concentration is consequently not suitable in a sensitive error measure for a possible distance function, only the retention time calculation is considered in the following.

First, a grid spanning the column length in space and at least the experiment duration in time is created. the modifier concentrations are determined on a space/time grid. Not all grid points are relevant in the following, but for the sake of simplicity, efficiency-optimized methods are not further discussed.

Next, the relevant mobile phase modifier concentrations at the grid points are determined. This can for instance be done with a stencil-based finite difference implementation of a convection-diffusion model. These values are the basis to calculate Kp values for each point in the space/time grid.

An exemplary equation of the propagation speed of an adsorbable low-concentrated solute is given by $u_{prop}(t) = u(t)/(\varepsilon_{tot} + (1 - \varepsilon_{tot})K_p)$ where u(t) is the linear flow rate, $\varepsilon$tot is the total porosity and Kp is the partitioning coefficient of a target molecule which is a function of the mobile phase modifier concentrations (ionic strength, pH, etc.).

To obtain a trajectory of a target molecule through the space/time grid towards the outlet of the column, the distance travelled per time interval is calculated by integrating the propagation speed at the current position in the space time grid. This integration is continued until the distance travelled is equal or greater than the column length. In the first case, the current point in time provides the sought value; in the latter case, a more precise value between the last point in time and the current one can be determined by interpolation.

Should the last point in the time grid be reached before the distance travelled in space is equal or greater than the column length, elution has not taken place. As long as the current propagation speed is positive, an estimate of the remaining time until the outlet is reached can be made.

EXAMPLE APPLICATION

Assuming that the example model from above $K(pH, C) = k_{eq} \cdot exp\left(k_{eq,1} \cdot pH\right) \left(\frac{\Lambda}{C}\right)^{\nu + \nu_1 \cdot pH}$ is to be calibrated with linear gradient experiments, then e.g. 7 experiments can be used as shown schematically in Fig. 2: 3 experiments each with different salt gradients at 2 constant pH values and a center point at medium pH with medium gradient slope.

In the traditional Yamamoto approach, one would proceed as follows. For each of the 3 results at constant pH, one would apply the classic Yamamoto method to obtain values for the $k_{eq} \cdot exp(k_{eq,1} \cdot pH)$ and $v + v_1 \cdot pH$ terms. The individual parameters $k_{eq, keq,1,} v, v_1$ are then determined by solving a system of equations.

Considering the following experimental results with a capacity $\Lambda = 0.5$ M

| Normalized gradient slope GH [M] | Salt concentration at retention [M] | relative pH |
|---|---|---|
| 0.0024 | 0.118 | 0.3 |
| 0.0012 | 0.11 | 0.3 |
| 0.000792 | 0.105 | 0.3 |
| 0.000744 | 0.151 | -0.3 |
| 0.0024 | 0.178 | -0.3 |
| 0.001008 | 0.155 | -0.3 |
| 0.0012 | 0.135 | 0 |

the classical procedure above would result in $k_{eq} = 7.8e - 4$, $k_{eq,1} = -11.7$, $v = 7.2$, $v_1 = -4.5$. However, the predicted salt concentration at retention for the center point would be 0.129 M, which is unacceptably far from the measured value of 0.135 M.

Using the new method, based on the integration of a function of the partitioning coefficient over a grid, one can obtain different values: $k_{eq} = 3.9e - 3$, $k_{eq,1} = -3.9$, $v = 6.2$, $v_1 = -0.63$ that lead to a much better overall fit of all points and a predicted salt concentration at retention of 0.133 M.

Finally, it should be understood that the invention is not limited to the embodiments described above, but also relates to and incorporates all embodiments within the scope of the appended independent claims.

## Claims

1. A method (500), comprising:
   performing (510) an experiment as a series of chromatography runs, wherein the series of chromatography runs comprises at least two chromatography runs using non-identical operation modes, **characterised by**:

   recording (520) retention behavior data of at least one target molecule for each of the chromatography runs, wherein the retention behavior data indicates at least measured points of elution (M-POE) and properties of the measured points of elution (M-POE_i),
   generating (530) at least one computational grid (MTX) in at least one dimension, where the extent of the grid (MTX) is indicative of maximum ranges between a starting point of the experiment and an end point of the experiment, selecting (540) an adsorption model from a set of predetermined adsorption models, the adsorption model having initial candidate values of adsorption model parameters,
   calculating partitioning coefficient values (550) for all points in the computational grid using the selected adsorption model,
   calculating integrals (560) of a function of the calculated partitioning coefficient values over at least two paths in the computational grid (MTX) to obtain properties of calculated points of elution (C-POE_i),
   calculating (570) an aggregated distance measure (D) from the properties of calculated points of elution (C-POE_i) to respective properties of the measured points of elution (M-POE_i),
   selecting (580) new candidate values of adsorption model parameters,
   repeating (590) the steps of calculating (550) partitioning coefficient values, calculating integrals (560), calculating aggregated distance measure (570), and selecting (580) new candidate values until the aggregated distance measure (D) is minimized, and
   determining parameters (595) of the adsorption model using the selected values of adsorption model parameters that minimizes the aggregated distance measure (D).

2. The method (500) according to claim 1, wherein the measured points of elution (M-POE) comprise a selection of points in time and/or a selection of volumes and/or a selection of mobile phase modifier concentrations at elution and/or chromatography run characteristics.

3. The method (500) according to claim 1 or claim 2, wherein the extent of the grid (MTX) is indicative of ranges of mobile phase modifier concentrations (101, 102), wherein the function of the calculated partitioning coefficient values is an inverse function, wherein calculating the aggregated distance measure (D) comprises:

calculating (5701) properties of the calculated points of elution(C-POE_i) by:
calculating integrals over the at least two paths in the computational grid (MTX) using the inverse function of the calculated partitioning coefficient values to obtain the properties of the calculated points of elution (C-POE_i),
calculating (5702) the aggregated distance measure (D) between the properties of the calculated points of elution (C-POE_i) and the respective properties of the measured points of elution (M-POE_i).

4. The method (500) according to claim 3, further comprising:

selecting (5703) a chromatography column model from a set of predetermined chromatography column models,
determining (5704) candidate values of additional adsorption model parameters by fitting the retention behavior data to a simulated chromatogram.

5. The method (500) according to any preceding claim, wherein the extent of the computational grid (MTX) is indicative of a duration in time of the series of chromatography runs and an axial column dimension of the series of chromatography runs, wherein calculating the aggregated distance measure (D) comprises:

calculating the properties of the calculated points of elution (C-POE_i) by:

selecting (5706) a chromatography column model from a set of predetermined chromatography column models,
calculating (5707) propagation speed values of the at least one target molecule from an inlet of the column to an outlet of the column using the selected chromatography column model and partitioning coefficient values calculated on the computational grid (MTX), and
simulating (5708) retention behavior data of the at least one target molecule by calculating the properties of the calculated points of elution (C-POE_i) by calculating integrals of the propagation speed to obtain at least one trajectory through the computational grid (MTX),

wherein the aggregated distance measure (D) is calculated between the properties of the calculated points of elution (C-POE_i) and the respective properties of the measured points of elution (M-POE_i).

6. The method (500) according to claim 5, further comprising:
selecting (5709) candidate values of additional adsorption model parameters by fitting the retention behavior data to a simulated chromatogram.

7. The method (500) according to any preceding claim further comprising:

calibrating (810) a mechanistic model using the determined values of the adsorption model parameters, the selected candidate values of additional adsorption model parameters and the chromatography column model parameters, and
simulating (820) a chromatography run using the calibrated mechanistic model to obtain chromatography settings selected from a group of settings comprising loading solution and elution conditions.

8. The method (500) according to claim 7 further comprising:
applying (830) the obtained chromatography settings to chromatographic separation process to separate the at least one target molecule.

9. The method (500) according to any of the preceding claims,

wherein selecting (540) an adsorption model comprises selecting a plurality of adsorption models from the set of predetermined adsorption models,
wherein calculating (550) partitioning coefficient values comprises calculating partitioning coefficient values for each of the plurality of adsorption models,

wherein calculating integrals (560) comprises calculating integrals for each of the plurality of adsorption models, calculating (570) an aggregated distance measure (D) for each of the plurality of adsorption models, selecting (580) new candidate values of adsorption model parameters, for each of the plurality of adsorption models,

repeating (590) the steps of calculating (550) partitioning coefficient values, calculating integral/s (560), calculating aggregated distance measure (570), and selecting (580) until the aggregated distance measure (D) is minimized for each of the plurality of adsorption models, and

determining parameters (595) of the adsorption model using the selected values of adsorption model parameters related to the adsorption model of the plurality of adsorption models that minimizes the aggregated distance measure (D).

10. A device (900), the device comprising:

a control unit (960) comprising circuitry, the circuitry comprising:

a processing circuitry, and

a memory, said memory comprising instructions executable by said processing circuitry, wherein the control unit is communicatively coupled to controllable units of a fluid network comprising fluidly coupled device components configured to hold fluids, direct fluids, and control flow of fluids, whereby said device is configured to perform the method (500) according to any of the preceding claims when the instructions are executed by said processing circuitry.

11. A computer program comprising computer-executable instructions for causing the control unit (960) comprised in the device (900) of claim 10,

when the computer-executable instructions are executed on processing circuitry comprised in the control unit, to perform any of the method steps of the method (500) according to any of claims 1-9.

12. A computer program product comprising a computer-readable storage medium, the computer-readable storage medium having the computer program according to claim 11 embodied therein.

**Patentansprüche**

1. Verfahren (500), umfassend:

Durchführen (510) eines Experiments als eine Serie von Chromatographieläufen, wobei die Serie von Chromatographieläufen mindestens zwei Chromatographieläufe umfasst, die nicht-identische Betriebsmodi verwenden, **gekennzeichnet durch**:

Aufzeichnen (520) von Daten zum Retentionsverhalten von mindestens einem Zielmolekül für jeden der Chromatographieläufe, wobei die Daten zum Retentionsverhalten mindestens gemessene Elutionspunkte (M-POE) und Eigenschaften der gemessenen Elutionspunkte (M-POE_i) anzeigen,

Erzeugen (530) mindestens eines Berechnungsgitters (MTX) in mindestens einer Abmessung, wobei die Ausdehnung des Berechnungsgitters (MTX) auf maximale Bereiche zwischen einem Startpunkt des Experiments und einem Endpunkt des Experiments hinweist, Auswählen (540) eines Adsorptionsmodells aus einer Menge vorbestimmter Adsorptionsmodelle, wobei das Adsorptionsmodell anfängliche Kandidatenwerte von Adsorptionsmodellparametern aufweist,

Berechnen von Verteilungskoeffizientenwerten (550) für alle Punkte im Berechnungsgitter unter Verwendung des ausgewählten Adsorptionsmodells,

Berechnen von Integralen (560) einer Funktion der berechneten Verteilungskoeffizientenwerte über mindestens zwei Pfade im Berechnungsgitter (MTX), um Eigenschaften berechneter Elutionspunkte (C-POE_i) zu erhalten,

Berechnen (570) eines aggregierten Distanzmaßes (D) von den Eigenschaften der berechneten Elutionspunkte (C-POE_i) zu jeweiligen Eigenschaften der gemessenen Elutionspunkte (M-POE_i),

Auswählen (580) neuer Kandidatenwerte von Adsorptionsmodellparametern,

Wiederholen (590) der Schritte des Berechnens (550) von Verteilungskoeffizientenwerten, des Berechnens von Integralen (560), des Berechnens des aggregierten Distanzmaßes (570) und des Auswählens (580) neuer Kandidatenwerte, bis das aggregierte Distanzmaß (D) minimiert ist, und

Bestimmen von Parametern (595) des Adsorptionsmodells unter Verwendung der ausgewählten Werte der Adsorptionsmodellparameter, die das aggregierte Distanzmaß (D) minimieren.

2. Verfahren (500) nach Anspruch 1, wobei die gemessenen Elutionspunkte (M-POE) eine Auswahl von Zeitpunkten und/oder eine Auswahl von Volumina und/oder eine Auswahl von Konzentrationen des Modifikators der mobilen Phase bei Elution und/oder Charakteristika von Chromatographieläufen umfassen.

3. Verfahren (500) nach Anspruch 1 oder Anspruch 2, wobei die Ausdehnung des Berechnungsgitters (MTX) auf Bereiche von Konzentrationen des Modifikators der mobilen Phase (101, 102) hinweist, wobei die Funktion der berechneten Verteilungskoeffizientenwerte eine inverse Funktion ist, wobei das Berechnen des aggregierten Distanzmaßes (D) Folgendes umfasst:

Berechnen (5701) von Eigenschaften der berechneten Elutionspunkte (C-POE_i) durch:
Berechnen von Integralen über die mindestens zwei Pfade im Berechnungsgitter (MTX) unter Verwendung der inversen Funktion der berechneten Verteilungskoeffizientenwerte, um die Eigenschaften der berechneten Elutionspunkte (C-POE_i) zu erhalten,
Berechnen (5702) des aggregierten Distanzmaßes (D) zwischen den Eigenschaften der berechneten Elutionspunkte (C-POE_i) und den jeweiligen Eigenschaften der gemessenen Elutionspunkte (M-POE_i).

4. Verfahren (500) nach Anspruch 3, weiter umfassend:

Auswählen (5703) eines Chromatographiesäulenmodells aus einer Menge vorbestimmter Chromatographiesäulenmodelle,
Bestimmen (5704) von Kandidatenwerten zusätzlicher Adsorptionsmodellparameter durch Anpassen der Daten zum Retentionsverhalten an ein simuliertes Chromatogramm.

5. Verfahren (500) nach einem vorstehenden Anspruch, wobei die Ausdehnung des Berechnungsgitters (MTX) auf eine Zeitdauer der Serie von Chromatographieläufen und eine axiale Säulendimension der Serie von Chromatographieläufen hinweist, wobei das Berechnen des aggregierten Distanzmaßes (D) Folgendes umfasst:

Berechnen der Eigenschaften der berechneten Elutionspunkte (C-POE_i) durch:

Auswählen (5706) eines Chromatographiesäulenmodells aus einer Menge vorbestimmter Chromatographiesäulenmodelle,
Berechnen (5707) von Ausbreitungsgeschwindigkeitswerten des mindestens einen Zielmoleküls von einem Einlass der Säule zu einem Auslass der Säule unter Verwendung des ausgewählten Chromatographiesäulenmodells und im Berechnungsgitter (MTX) berechneter Verteilungskoeffizientenwerte, und
Simulieren (5708) von Daten zum Retentionsverhalten des mindestens einen Zielmoleküls durch Berechnen der Eigenschaften der berechneten Elutionspunkte (C-POE_i) durch Berechnen von Integralen der Ausbreitungsgeschwindigkeit, um mindestens eine Trajektorie durch das Berechnungsgitter (MTX) zu erhalten,

wobei das aggregierte Distanzmaß (D) zwischen den Eigenschaften der berechneten Elutionspunkte (C-POE_i) und den jeweiligen Eigenschaften der gemessenen Elutionspunkte (M-POE_i) berechnet wird.

6. Verfahren (500) nach Anspruch 5, weiter umfassend:
Auswählen (5709) von Kandidatenwerten zusätzlicher Adsorptionsmodellparameter durch Anpassen der Daten zum Retentionsverhalten an ein simuliertes Chromatogramm.

7. Verfahren (500) nach einem vorstehenden Anspruch, das weiter Folgendes umfasst:

Kalibrieren (810) eines mechanistischen Modells unter Verwendung der bestimmten Werte der Adsorptionsmodellparameter, der ausgewählten Kandidatenwerte zusätzlicher Adsorptionsmodellparameter und der Chromatographiesäulenmodellparameter, und
Simulieren (820) eines Chromatographielaufs unter Verwendung des kalibrierten mechanistischen Modells, um Chromatographieeinstellungen zu erhalten, die aus einer Gruppe von Einstellungen ausgewählt sind, die Ladungslösung und Elutionsbedingungen umfasst.

8. Verfahren (500) nach Anspruch 7, das weiter Folgendes umfasst:
Anwenden (830) der erhaltenen Chromatographieeinstellungen auf einen chromatographischen Trennprozess, um das mindestens eine Zielmolekül abzutrennen.

**9.** Verfahren (500) nach einem der vorstehenden Ansprüche,

wobei das Auswählen (540) eines Adsorptionsmodells das Auswählen einer Vielzahl von Adsorptionsmodellen aus der Menge vorbestimmter Adsorptionsmodelle umfasst,
wobei das Berechnen (550) von Verteilungskoeffizientenwerten das Berechnen von Verteilungskoeffizientenwerten für jedes der Vielzahl von Adsorptionsmodellen umfasst,
wobei das Berechnen von Integralen (560) das Berechnen von Integralen für jedes der Vielzahl von Adsorptionsmodellen umfasst,
Berechnen (570) eines aggregierten Distanzmaßes (D) für jedes der Vielzahl von Adsorptionsmodellen,
Auswählen (580) neuer Kandidatenwerte von Adsorptionsmodellparametern für jedes der Vielzahl von Adsorptionsmodellen,
Wiederholen (590) der Schritte des Berechnens (550) von Verteilungskoeffizientenwerten, des Berechnens von Integralen (560), des Berechnens des aggregierten Distanzmaßes (570) und des Auswählens (580), bis das aggregierte Distanzmaß (D) für jedes der Vielzahl von Adsorptionsmodellen minimiert ist, und
Bestimmen von Parametern (595) des Adsorptionsmodells unter Verwendung der ausgewählten Werte der Adsorptionsmodellparameter, die sich auf das Adsorptionsmodell der Vielzahl von Adsorptionsmodellen beziehen, das das aggregierte Distanzmaß (D) minimiert.

**10.** Vorrichtung (900), wobei die Vorrichtung umfasst:
eine Steuereinheit (960), die Schaltungen umfasst, wobei die Schaltungen umfassen:

eine Verarbeitungsschaltung, und
einen Speicher, wobei der Speicher Anweisungen umfasst, die von der Verarbeitungsschaltung ausführbar sind, wobei die Steuereinheit kommunikativ mit steuerbaren Einheiten eines Fluidnetzwerks gekoppelt ist, das fluidisch gekoppelte Vorrichtungsbauteile umfasst, die ausgebildet sind, Fluide zu halten, Fluide zu leiten und den Fluss von Fluiden zu steuern, wobei die Vorrichtung ausgebildet ist, das Verfahren (500) nach einem der vorstehenden Ansprüche durchzuführen, wenn die Anweisungen von der Verarbeitungsschaltung ausgeführt werden.

**11.** Computerprogramm, umfassend computerausführbare Anweisungen zum Veranlassen der in der Vorrichtung (900) nach Anspruch 10 umfassten Steuereinheit (960),
wenn die computerausführbaren Anweisungen auf einer in der Steuereinheit umfassten Verarbeitungsschaltung ausgeführt werden, einen der Verfahrensschritte des Verfahrens (500) nach einem der Ansprüche 1-9 durchzuführen.

**12.** Computerprogrammprodukt, das ein computerlesbares Speichermedium umfasst, wobei das computerlesbare Speichermedium das Computerprogramm nach Anspruch 11 darin verkörpert aufweist.

**Revendications**

**1.** Procédé (500), comprenant :
la réalisation (510) d'une expérience sous forme d'une série de cycles de chromatographie, dans lequel la série de cycles de chromatographie comprend au moins deux cycles de chromatographie utilisant des modes de fonctionnement non identiques, **caractérisé par** :

l'enregistrement (520) de données de comportement de rétention d'au moins une molécule cible pour chacun des cycles de chromatographie, dans lequel les données de comportement de rétention indiquent au moins des points d'élution mesurés (M-POE) et des propriétés des points d'élution mesurés (M-POE_i),
la génération (530) d'au moins une grille de calcul (MTX) dans au moins une dimension, où l'étendue de la grille (MTX) est indicative de plages maximales entre un point de départ de l'expérience et un point final de l'expérience, la sélection (540) d'un modèle d'adsorption parmi un ensemble de modèles d'adsorption prédéterminés, le modèle d'adsorption présentant des valeurs candidates initiales de paramètres de modèle d'adsorption,
le calcul de valeurs de coefficient de partitionnement (550) pour tous les points dans la grille de calcul en utilisant le modèle d'adsorption sélectionné,
le calcul d'intégrales (560) d'une fonction des valeurs de coefficient de partitionnement calculées sur au moins deux chemins dans la grille de calcul (MTX) afin d'obtenir des propriétés de points d'élution calculés (C-POE_i),

le calcul (570) d'une mesure de distance agrégée (D) à partir des propriétés de points d'élution calculés (C-POE_i) jusqu'à des propriétés respectives des points d'élution mesurés (M-POE_i),

la sélection (580) de nouvelles valeurs candidates de paramètres de modèle d'adsorption,

la répétition (590) des étapes de calcul (550) de valeurs de coefficient de partitionnement, de calcul d'intégrales (560), de calcul d'une mesure de distance agrégée (570), et de sélection (580) de nouvelles valeurs candidates jusqu'à ce que la mesure de distance agrégée (D) soit réduite au minimum, et

la détermination de paramètres (595) du modèle d'adsorption en utilisant les valeurs sélectionnées de paramètres de modèle d'adsorption qui réduit au minimum la mesure de distance agrégée (D).

2. Procédé (500) selon la revendication 1, dans lequel les points d'élution mesurés (M-POE) comprennent une sélection de points dans le temps et/ou une sélection de volumes et/ou une sélection de concentrations de modificateur de phase mobile à l'élution et/ou de caractéristiques de cycle de chromatographie.

3. Procédé (500) selon la revendication 1 ou la revendication 2, dans lequel l'étendue de la grille (MTX) est indicative de plages de concentrations de modificateur de phase mobile (101, 102), dans lequel la fonction des valeurs de coefficient de partitionnement calculées est une fonction inverse, dans lequel le calcul de la mesure de distance agrégée (D) comprend :
le calcul (5701) de propriétés des points d'élution calculés (C-POE_i) en :

calculant des intégrales sur les au moins deux chemins dans la grille de calcul (MTX) en utilisant la fonction inverse des valeurs de coefficient de partitionnement calculées afin d'obtenir les propriétés des points d'élution calculés (C-POE_i),

calculant (5702) la mesure de distance agrégée (D) entre les propriétés des points d'élution calculés (C-POE_i) et les propriétés respectives des points d'élution mesurés (M-POE_i).

4. Procédé (500) selon la revendication 3, comprenant en outre :

la sélection (5703) d'un modèle de colonne de chromatographie parmi un ensemble de modèles de colonne de chromatographie prédéterminés,

la détermination (5704) de valeurs candidates de paramètres supplémentaires de modèle d'adsorption en ajustant les données de comportement de rétention à un chromatogramme simulé.

5. Procédé (500) selon une quelconque revendication précédente, dans lequel l'étendue de la grille de calcul (MTX) est indicative d'une durée dans le temps de la série de cycles de chromatographie et d'une dimension axiale de colonne de la série de cycles de chromatographie, dans lequel le calcul de la mesure de distance agrégée (D) comprend :
le calcul des propriétés des points d'élution calculés (C-POE_i) en :

sélectionnant (5706) un modèle de colonne de chromatographie parmi un ensemble de modèles de colonne de chromatographie prédéterminés,

calculant (5707) des valeurs de vitesse de propagation de ladite au moins une molécule cible depuis une entrée de la colonne jusqu'à une sortie de la colonne en utilisant le modèle de colonne de chromatographie sélectionné et des valeurs de coefficient de partitionnement calculées sur la grille de calcul (MTX), et

simulant (5708) des données de comportement de rétention de ladite au moins une molécule cible en calculant les propriétés des points d'élution calculés (C-POE_i) en calculant des intégrales de la vitesse de propagation afin d'obtenir au moins une trajectoire à travers la grille de calcul (MTX),

dans lequel la mesure de distance agrégée (D) est calculée entre les propriétés des points d'élution calculés (C-POE_i) et les propriétés respectives des points d'élution mesurés (M-POE_i).

6. Procédé (500) selon la revendication 5, comprenant en outre :
la sélection (5709) de valeurs candidates de paramètres supplémentaires de modèle d'adsorption en ajustant les données de comportement de rétention à un chromatogramme simulé.

7. Procédé (500) selon une quelconque revendication précédente comprenant en outre :

l'étalonnage (810) d'un modèle mécaniste en utilisant les valeurs déterminées des paramètres de modèle d'adsorption, les valeurs candidates sélectionnées de paramètres supplémentaires de modèle d'adsorption et les paramètres de modèle de colonne de chromatographie, et

la simulation (820) d'un cycle de chromatographie en utilisant le modèle mécaniste étalonné afin d'obtenir des paramétrages de chromatographie sélectionnés parmi un groupe de paramétrages comprenant une solution de charge et des conditions d'élution.

8. Procédé (500) selon la revendication 7 comprenant en outre :
l'application (830) des paramétrages de chromatographie obtenus à un processus de séparation chromatographique pour séparer ladite au moins une molécule cible.

9. Procédé (500) selon l'une quelconque des revendications précédentes,

dans lequel la sélection (540) d'un modèle d'adsorption comprend la sélection d'une pluralité de modèles d'adsorption parmi l'ensemble de modèles d'adsorption prédéterminés,
dans lequel le calcul (550) de valeurs de coefficient de partitionnement comprend le calcul de valeurs de coefficient de partitionnement pour chacun de la pluralité de modèles d'adsorption,
dans lequel le calcul d'intégrales (560) comprend le calcul d'intégrales pour chacun de la pluralité de modèles d'adsorption,
le calcul (570) d'une mesure de distance agrégée (D) pour chacun de la pluralité de modèles d'adsorption,
la sélection (580) de nouvelles valeurs candidates de paramètres de modèle d'adsorption, pour chacun de la pluralité de modèles d'adsorption,
la répétition (590) des étapes de calcul (550) de valeurs de coefficient de partitionnement, de calcul d'intégrales (560), de calcul d'une mesure de distance agrégée (570), et de sélection (580) jusqu'à ce que la mesure de distance agrégée (D) soit réduite au minimum pour chacun de la pluralité de modèles d'adsorption, et
la détermination de paramètres (595) du modèle d'adsorption en utilisant les valeurs sélectionnées de paramètres de modèle d'adsorption liées au modèle d'adsorption de la pluralité de modèles d'adsorption qui réduit au minimum la mesure de distance agrégée (D).

10. Dispositif (900), le dispositif comprenant :
une unité de commande (960) comprenant une circuiterie, la circuiterie comprenant :

une circuiterie de traitement, et
une mémoire, ladite mémoire comprenant des instructions exécutables par ladite circuiterie de traitement, dans lequel l'unité de commande est couplée en communication à des unités pouvant être commandées du réseau fluidique comprenant des composants de dispositif couplés de manière fluidique configurés pour contenir des fluides,
diriger des fluides, et commander un flux de fluides, de telle sorte que ledit dispositif est configuré pour effectuer le procédé (500) selon l'une quelconque des revendications précédentes lorsque les instructions sont mises en œuvre par ladite circuiterie de traitement.

11. Programme informatique comprenant des instructions exécutables par ordinateur pour amener l'unité de commande (960) comprise dans le dispositif (900) de la revendication 10,
lorsque les instructions exécutables par ordinateur sont mises en œuvre sur une circuiterie de traitement comprise dans l'unité de commande, à effectuer l'une quelconque des étapes de procédé du procédé (500) selon l'une quelconque des revendications 1 à 9.

12. Produit de programme informatique comprenant un support de stockage lisible par ordinateur, le support de stockage lisible par ordinateur présentant le programme informatique selon la revendication 11 incorporé ici.

Fig. 1

Fig. 2

$$D=f(d_i, d_j,...)$$

$$M\text{-}POE_i=\{time\_elu, vol\_elu, C\_elu, pH\_elu, GH,...\}$$

$$C\text{-}POE_i=\{time\_elu, vol\_elu, C\_elu, pH\_elu, GH,...\}$$

Fig. 3

Fig. 4

Fig. 5

500

510: performing a series of chromatography runs, wherein the series of chromatography runs comprises at least two chromatography runs using non-identical operation modes

520: recording retention behavior data of at least one target molecule for each of the chromatography runs, wherein the retention behavior data indicates at least measured points of elution,

530: generating at least one computational grid in at least one dimension, where the extent of the grid is indicative of a range between a starting point/point of injection and an end point/point of elution

540: selecting an adsorption model from a set of predetermined adsorption models, the adsorption model having initial candidate values of adsorption model parameters,

550: calculating partitioning coefficient values for all points in the computational grid using the selected adsorption model,

560: calculating integral/s a function of the calculated partitioning coefficient values over one or more paths in the computational grid to obtain integrated function values

570: calculating an aggregated distance measure from the integrated function values to respective experimental reference values

580: selecting new candidate values of adsorption model parameters

No

590: Minimized ?

Yes

595: determining parameters of the adsorption model using the selected values of adsorption model parameters that minimizes the aggregated distance measure

570:

5701: calculating a property of a point of elution using the grid by calculating integral/s over the two or more paths in the computational grid MTX using the inverse function of the calculated partitioning coefficient values to obtain the property of the point of elution

5702: calculating the aggregated distance measure between calculated property/properties of the point of elution and measured property/properties of the point of elution

5703: selecting a chromatography column model from a set of predetermined chromatography column models

5704: determining candidate values of additional adsorption model parameters by fitting the retention behavior data to a simulated chromatogram

Fig. 6

570:

5706: selecting a chromatography column model from a set of predetermined chromatography column models

↓

5707: calculating propagation speed values of the at least one target molecule from an inlet of the column to an outlet of the column using the selected chromatography column model and partitioning coefficient values calculated on the computational grid

↓

5708: simulating retention behavior data of the at least one target molecule by calculating the property of the point of elution by calculating integral/s of the propagation speed to obtain at least one trajectory through the computational grid

↓

5709: selecting candidate values of additional adsorption model parameters by fitting the retention behavior data to a simulated chromatogram

Fig. 7

500

810: calibrating a mechanistic model using the determined values of the adsorption model, the determined candidate values of additional adsorption model parameters and the chromatography column model parameters

820: simulating a chromatography run using the calibrated mechanistic model to obtain chromatography settings selected from a group of settings comprising loading solution and elution conditions

830:applying the obtained chromatography settings to chromatographic separation of at least one target molecule

Fig. 8

900

910

931

930

980

970

960

932

940

950

951    952    953

Fig. 9